# EUROPÄISCHE PATENTSCHRIFT

(11) **EP 3 064 425 B1**
(45) Veröffentlichungstag und Bekanntmachung des Hinweises auf die Patenterteilung: **13.09.2017**
(21) Anmeldenummer: 16000307.5
(22) Anmeldetag: 06.02.2016
(51) Int. Cl.: B62M 9/10

(54) **RITZELANORDNUNG MIT ADAPTER**
PINION ASSEMBLY WITH ADAPTER
SYSTEME DE PIGNON ET ADAPTATEUR

(30) Priorität: 02.03.2015 DE 102015203709
(43) Veröffentlichungstag der Anmeldung: 07.09.2016
(73) Patentinhaber: SRAM Deutschland GmbH, 97424 Schweinfurt (DE)
(72) Erfinder: Reineke, Sebastian, 97422 Schweinfurt (DE); Braedt, Henrik, 97456 Dittelbrunn/OT Hambach (DE)

(56) Entgegenhaltungen:
- EP-A1- 1 407 962
- EP-A2- 2 546 136

## Beschreibung

Die vorliegende Erfindung betrifft eine Ritzelanordnung für einen Fahrrad-antrieb, umfassend: ein Ritzel mit einer zentralen Öffnung und einer Außenverzahnung, einen separat von dem Ritzel ausgebildeten Adapter, der dazu angepasst ist, drehfest mit dem Ritzel verbunden zu werden, und der eine zentrale Öffnung umfasst, an deren Rand mehrere Mitnehmerelemente vorgesehen sind, die sich von dem Rand der zentralen Öffnung des Adapters radial nach innen erstrecken und dazu ausgebildet sind, Drehmoment von dem mit dem Adapter verbundenen Ritzel auf einen Antreiber an einer Hinterradnabe eines Fahrrads zu übertragen.

Eine derartige Ritzelanordnung ist beispielsweise aus der Druckschrift EP 1688345 B1 bekannt. Dabei ist der Adapter als Ritzel-Träger oder "Spider" mit einem inneren Ring und sich davon radial nach außen erstreckenden Befestigungsarmen zur Befestigung von einem oder mehreren Ritzeln ausgebildet. Das durch die Mitnehmer-Elemente gebildete Innenprofil des Adapters sorgt dabei sowohl für eine Übertragung von Drehmoment von dem Ritzel auf den mit einem entsprechenden Außenprofil versehenen Antreiber als auch für eine radiale Zentrierung der Ritzelanordnung auf dem Antreiber.

Dies stellt hohe Anforderungen an die Fertigungsgenauigkeit für den Adapter, zumal dieser in axialer Richtung vorzugsweise deutlich breiter ausgebildet ist als das Ritzel, um eine möglichst große Kraft übertragende Fläche zu erzeugen, was wiederum die korrekte radiale Zentrierung erschwert. Dokument EP 1 407 962 A1 offenbart die Präambel des Anspruchs 1. Andererseits ist beispielsweise aus der EP 2319752 A2 eine Ritzelanordnung bekannt, bei überhaupt kein separater Adapter vorgesehen ist, sondern die Mitnehmer-Elemente zur Wechselwirkung mit dem Außenprofil des Antreibers direkt am Innenumfang von dem Ritzel selbst ausgebildet sind.

Hierdurch kann zwar eine relativ genaue Zentrierung erreicht werden, aber die Breite der Mitnehmer-Elemente ist auf die Breite des Ritzels beschränkt, so dass die Kraft übertragende Fläche verhältnismäßig klein ist.

Dies hat speziell bei der Materialpaarung von einem Ritzel aus Stahl und einem Antreiber aus Aluminium unter Umständen ein Eingraben des Ritzels in den Antreiber zur Folge, was den Antreiber zerstören und die Montage bzw. Demontage der Ritzelanordnung und des Antreibers erschweren kann.

Bei Ritzel-Kassetten, die auf einem bestimmten Typ von Antreiber (etwa einem XD-Antreiber) genutzt werden, werden darüber hinaus die Kräfte und die daraus resultierenden Drehmomente sämtlicher Ritzel über nur ein einziges Abschlussritzel und somit nur an einer einzigen Stelle in den Antreiber eingeleitet, was die oben erläuterte Problematik noch verstärkt.

Bedingt durch das Fertigungsverfahren weisen viele Antreiber zusätzlich einen Freistich am axialen Anschlag auf. Dies führt dazu, dass insbesondere das letzte (größte) Ritzel, also das Abschlussritzel, zusätzlich an Überdeckungsfläche mit dem Antreiber verliert.

Gemeinsam ist den beiden oben erwähnten, aus dem Stand der Technik bekannten Ritzelanordnungen, dass die Mitnehmer-Elemente jeweils sowohl zur radialen Zentrierung der Ritzelanordnung auf dem Antreiber als auch zur Übertragung von Drehmoment von der Ritzelanordnung auf den Antreiber dienen.

Vor diesem Hintergrund besteht die Aufgabe des der vorliegenden Erfindung darin, die aus dem Stand der Technik bekannte Ritzelanordnung so weiter zu entwickeln, dass die radiale Zentrierung verbessert wird, ohne die Drehmoment-Übertragung dabei merklich zu verschlechtern.

Hierzu ist erfindungsgemäß vorgesehen, dass der minimale Radius der zentralen Öffnung des Ritzels kleiner ist als der maximale Radius der zentralen Öffnung des Adapters, wobei der Radius der zentralen Öffnung des Ritzels an wenigstens drei über den Umfang verteilen Stellen, vorzugsweise über den gesamten Umfang, seinen Minimalwert annimmt.

Hierdurch werden die Voraussetzungen dafür geschaffen, dass dann, wenn Ritzel und Adapter auf den Antreiber aufgesetzt sind, das radiale Spiel zwischen Antreiber und Ritzel kleiner ist als das radiale Spiel zwischen Antreiber und Adapter. Damit erfolgt die Zentrierung der Ritzelanordnung auf dem Antreiber erfindungsgemäß über das Innenprofil des Ritzels, während die Drehmoment-Übertragung weiterhin über die Mitnehmer-Elemente des Adapters erfolgt. Die Funktionen "Kraft bzw. Drehmoment übertragen" und "Ritzel zentrieren" werden also auf zwei separate Bauteile verteilt.

Diese Funktionsteilung erleichtert die Herstellung der Einzelkomponenten. Durch die Entkopplung der Funktionen wird aufgrund der besseren Zentrierung der Rundlauf der Ritzel auf dem Antreiber verbessert. Des Weiteren limitiert die axiale Ausdehnung des Ritzels am Antreiber nicht mehr, wie noch in der EP 2319752 A2, die Kraft übertragende Fläche. Diese Fläche kann bei der erfindungsgemäßen Lösung nun über die Breite des Adapters beliebig eingestellt werden, ohne die Zentrierung zu beeinflussen. Eine Vergrößerung der Kraft übertragenden Fläche verringert die Gefahr einer Beschädigung des Antreibers.

Erfindungsgemäß werden Adapter und Ritzel drehfest miteinander verbunden. Diese Verbindung dient primär der Übertragung des Drehmoments von dem Ritzel auf den Adapter, da die Radialkräfte über die Zentrierung am Innenprofil des Ritzels abgestützt werden. Prinzipiell gibt es diverse verschiedene Möglichkeiten der drehfesten Verbindung, etwa Vorsprünge, Stifte, umgebogene Arme oder ein sonstiger Form-, Kraft- oder Stoffschluss.

Bevorzugt ist vorgesehen, dass das Ritzel aus einem Material hergestellt ist, welches härter ist als das Material des Adapters. Besonders bevorzugt weist dabei das Material des Adapters eine Härte auf, die nicht größer ist als die des Antreibers. Sollte es also bei einer zu großer Kraftübertragung zu einem Eingraben des härteren in das weichere Material kommen, so wird hierdurch nicht der Antreiber sondern höchstens der Adapter beschädigt, der leichter ausgetauscht und kostengünstiger hergestellt werden kann als der Antreiber.

Kostengünstig und einfach kann der Adapter aus Aluminium oder glasfaserverstärktem Kunststoff (GFK) hergestellt werden, vorzugsweise im Spritzgussverfahren.

Der Adapter und das Ritzel können beispielsweise dadurch drehfest miteinander verbunden werden, dass ein Element aus dem Adapter und dem Ritzel, vorzugsweise das Ritzel, eine Mehrzahl von axialen Ausnehmungen umfasst, und das andere Element, vorzugsweise der Adapter, eine Mehrzahl von axialen Vorsprüngen umfasst, die dazu ausgebildet sind, in die axialen Ausnehmungen einzugreifen, vorzugsweise mit einer Presspassung.

Dabei sind die axialen Ausnehmungen vorzugsweise als axiale Durchgangsöffnungen ausgebildet, die das entsprechende Element vollständig durchqueren, denn auf diese Weise sind die axialen Vorsprünge des einen Elements, die in den Durchgangsöffnungen des anderen Elements aufgenommen sind, von der Seite des anderen Elements aus zugänglich, die dem einen Element abgewandt ist, und indem Druck von dieser Seite aus auf die axialen Vorsprünge ausgeübt wird, können die beiden aneinander montierten Elemente einfach wieder voneinander gelöst werden.

Alternativ kann vorgesehen sein, dass der Adapter und das Ritzel jeweils eine Mehrzahl von axialen Ausnehmungen umfassen, wobei die Ritzelanordnung weiter eine Mehrzahl von Stiften, vorzugsweise Stahlstiften, umfasst, die in die axialen Ausnehmungen von dem Adapter und dem Ritzel eingesetzt, vorzugsweise eingepresst sind, so dass die Stifte den Adapter und das Ritzel drehfest miteinander verbinden.

Diese Lösung weist Vorteile bezüglich des Gewichts auf, da die im Betrieb auftretenden Scherkräfte von den Stahlstiften problemlos aufgenommen werden, der Adapter jedoch aus einem leichteren Material, etwa Aluminium, gefertigt werden kann. Die Abwesenheit von Vorsprüngen in Ritzel und Adapter, also die im Verhältnis einfache, "zweidimensionale" Geometrie ermöglicht kostengünstige Fertigungsverfahren, etwa Extrudieren oder Stanzen.

Gemäß einer weiteren bevorzugten Ausführungsform kann vorgesehen sein, dass am Rand der zentralen Öffnung des Ritzels eine Mehrzahl von Ausnehmungen vorgesehen sind, und dass der Adapter als Ring aus einander in Umfangsrichtung abwechselnden ersten und zweiten Umfangsabschnitten mit der Grundform von Kreisring-Segmenten ausgebildet ist, wobei die zweiten Umfangsabschnitte die ersten Umfangsabschnitte radial nach innen überragen und axial zu einer Seite hin überragen, die im montierten Zustand dem Ritzel zugewandt ist.

Dabei bilden diejenigen Abschnitte der zweiten Umfangsabschnitte, welche die ersten Umfangsabschnitte radial nach innen überragen, die Mitnehmer-Elemente des Adapters, und diejenigen Abschnitte der zweiten Umfangsabschnitte, welche die ersten Umfangsabschnitte axial überragen, sind dazu ausgebildet, in die Ausnehmungen des Ritzels einzugreifen und damit das Ritzel drehfest am Adapter zu montieren. Ein solcher Adapter kann besonders einfach im Spritzgussverfahren hergestellt werden und ermöglicht weiterhin eine gute Drehmoment-Übertragung von dem Ritzel auf den Adapter.

Schließlich wird auch Schutz beantragt für eine Antriebsanordnung für ein Fahrrad, umfassend eine Ritzelanordnung nach einem der vorhergehenden Ansprüche und einen Antreiber mit mehreren Mitnehmer-Elementen, die dazu ausgebildet sind, in die Mitnehmer-Elemente des Adapters einzugreifen, um eine Drehmomentübertragung von dem Ritzel über den Adapter auf den Antreiber zu gewährleisten, wobei das radiale Spiel zwischen dem Antreiber und dem Ritzel kleiner ist als das radiale Spiel zwischen dem Antreiber und dem Adapter.

Besonders bevorzugt kann hierbei vorgesehen sein, dass zwischen dem Ritzel und dem Antreiber eine Übergangspassung oder Presspassung vorliegt, während zwischen dem Adapter und dem Antreiber eine Spielpassung vorliegt.

Auch kann vorgesehen sein, dass zwischen Ritzel und Antreiber eine Presspassung, und zwischen Adapter und Antreiber eine Übergangspassung vorliegt.

Es soll aber auch nicht ausgeschlossen sein, dass zwischen Ritzel und Antreiber sowie zwischen Adapter und Antreiber jeweils eine Übergangspassung oder auch eine Presspassung vorliegt, solange die Passung zwischen Ritzel und Antreiber fester ist als die zwischen Adapter und Antreiber.

Nachfolgend wird die vorliegende Erfindung anhand von drei bevorzugten Ausführungsbeispielen erläutert, die in den beigefügten Figuren dargestellt sind.

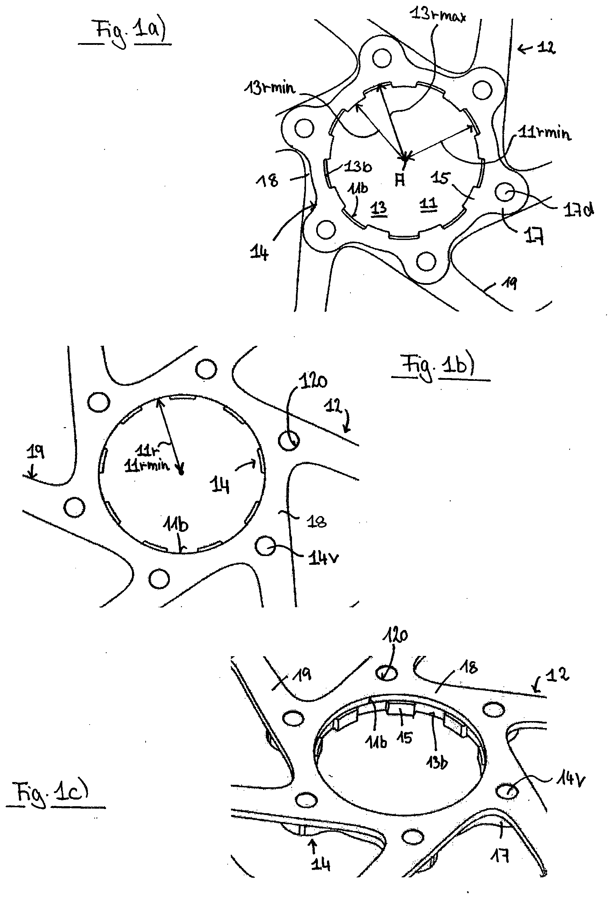

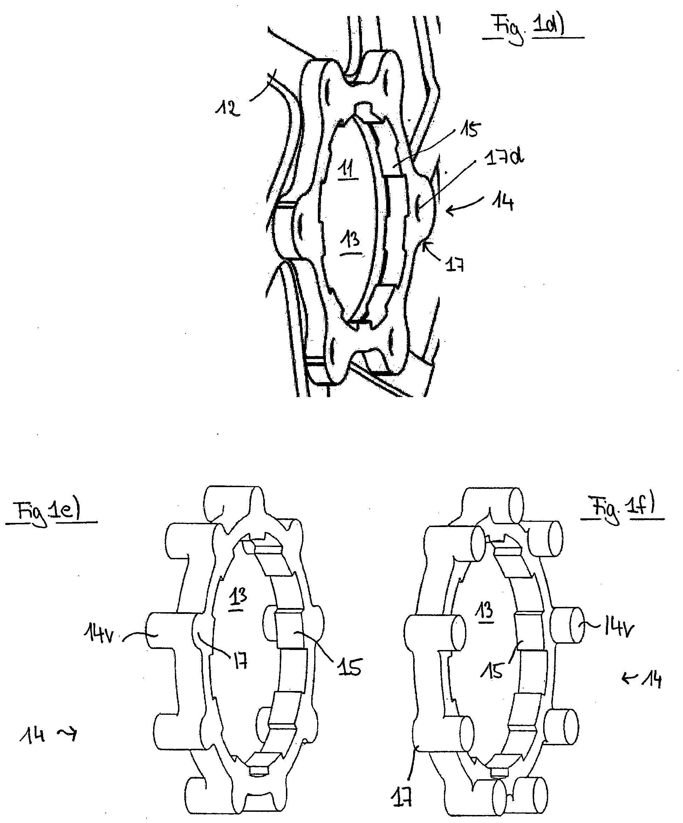

Dabei zeigt Figur 1 in den Teilabbildungen 1a) bis 1d) verschiedene Ansichten von einer Ritzelanordnung 10 gemäß einem ersten Ausführungsbeispiel der Erfindung, und in den Teilabbildungen 1e) bis 1f) verschiedene Ansichten eines gegenüber den Teilabbildungen 1a) bis 1d) leicht modifizierten Adapters,

Figur 2 zeigt in Teilabbildung 2a) eine Schnittdarstellung einer Ritzelanordnung 110 gemäß einem zweiten Ausführungsbeispiel der vorliegenden Erfindung mit dem zugehörigen Antreiber, und in den Teilabbildungen 2b) und 2c) zwei perspektivische Ansichten eines leicht gegenüber Teilabbildung 2a) modifizierten Adapters, und

Figur 3 zeigt in den Teilabbildungen 3a) bis 3d) verschiedene Ansichten einer Ritzelanordnung 210 gemäß einem dritten Ausführungsbeispiel der Erfindung und in den Teilabbildungen 3e) bis 3h) verschiedene Ansichten des zu dieser Ritzelanordnung gehörenden Adapters.

Um die Figuren nicht zu überfrachten sind nicht immer alle Bestandteile mit Bezugszeichen gekennzeichnet, insbesondere wenn mehrere gleichartige Bestandteile in einer Figur vorhanden sind.

Teilabbildung 1a) zeigt eine Draufsicht auf wesentliche Abschnitte einer erfindungsgemäßen Ritzelanordnung 10, die ein Ritzel 12 mit einer zentralen Öffnung 11 und einer in Figuren aus Platzgründen nicht dargestellten Außenverzahnung sowie einen an dem Ritzel 12 drehfest montierten Adapter 14 umfasst. Teilabbildung 1b) zeigt eine Draufsicht auf die Seite der Ritzelanordnung 10, die in Teilabbildung 1a) dem Betrachter abgewandt ist.

Der Adapter 14 ist im Wesentlichen ringförmig ausgebildet. Er weist im Inneren eine zentralen Öffnung 13 auf, an deren Rand 13b mehrere Mitnehmer-Elemente 15 in der Form von im Wesentlichen kreisringsegmentförmigen, vorstehenden Eingriffszähnen vorgesehen sind, die sich vom Rand 13b der zentralen Öffnung 13 des Adapters 14 radial nach innen erstrecken und dazu dienen, Drehmoment von dem mit dem Adapter 14 verbundenen Ritzel 12 auf einen in den Figuren nicht dargestellten Antreiber an einer Hinterradnabe eines Fahrrads zu übertragen. Dieser Antreiber weist in üblicher Weise an seinem Außenumfang Mitnehmer-Elemente auf, die zwischen die Mitnehmer-Elemente 15 des Adapters 14 zur Drehmoment-Übertragung eingreifen.

Wie Figur 1a) zeigt, nimmt der Radius 13r der zentralen Öffnung 13 des Adapters 14 als Funktion des Winkels um die Rotationsachse A der Ritzelanordnung 10 abwechselnd seinen Minimalwert 13rmin (an den Mitnehmern 15) und seinen Maximalwert 13rmax (zwischen benachbarten Mitnehmern 15) an.

Abgesehen von den nachfolgend beschriebenen Details insbesondere in Bezug auf Form und Größe der zentralen Öffnung 11 handelt es sich bei dem Ritzel 12 um ein konventionelles Ritzel einer Ritzelanordnung für die Hinterrad-Nabe eines Fahrrads, weswegen Details wie die genaue Gestalt oder die Außenverzahnung des Ritzels 12 in den Figuren nicht dargestellt sind. Es sind vorliegend im Wesentlichen die proximalen Endabschnitte mehrerer Verbindungsarme 19 zu erkennen, die sich in bekannter Weise von einem Innenring 18 des Ritzels 12 schräg nach außen erstrecken.

Das Ritzel 12 weist im vorliegenden Ausführungsbeispiel eine zentrale Öffnung 11 auf, deren Radius 11r, wie aus der Draufsicht in Teilabbildung 1b) ersichtlich, über den gesamten Umfang der Öffnung 11 konstant ist und damit auch über den gesamten Umfang seinen Minimalwert 11rmin (=11r) annimmt.

Wie in der Draufsicht in Teilabbildung 1a) besonders gut zu erkennen ist, ist der Radius 11r und damit auch der minimale Radius 11rmin der zentralen Öffnung 11 des Ritzels 12 kleiner als der maximale Radius 13rmax der zentralen Öffnung 13 des Adapters 14, also als der Radius 13r der zentralen Öffnung 13 des Adapters 14 zwischen benachbarten Mitnehmern 15.

Dies führt dazu, dass dann, wenn das Ritzel 12 und der daran drehfest montierte Adapter 14 auf den Antreiber aufgesetzt werden, die radiale Zentrierung der Ritzelanordnung 10 auf dem Antreiber über das Innenprofil des Ritzels 12 erfolgt, während eine Drehmomentübertragung über die Mitnehmer-Elemente 15 am Innenumfang von dem Adapter 14 umgesetzt wird.

Am Außenumfang des Adapters 14 sind mehrere (vorliegend sechs), gleichmäßig über den Umfang des Adapters 14 verteilte radiale Befestigungsvorsprünge 17 vorgesehen die in der Draufsicht im Wesentlichen kreisförmig sind, und von denen sich axiale Vorsprünge 14v (vgl. Fig. 1b)) des Adapters 14 in die Zeichenebene der Figur 1a) hinein erstrecken. Fertigungsbedingt sind an der in Teilabbildung 1a) sichtbaren Oberfläche der Befestigungsvorsprünge 17 jeweils kreisförmige Vertiefungen 17d vorgesehen, deren Umriss dem Querschnitt der Vorsprünge 14v in einer Schnittebene senkrecht zur Rotationsachse A entspricht. Diese Vertiefungen müssen jedoch nicht vorhanden sein.

Das Ritzel 12 weist den Vorsprüngen 14v entsprechende axiale Ausnehmungen oder Durchgangsöffnungen 12o auf, die dazu dienen, die axialen Vorsprünge 14v des Adapters 14 aufzunehmen und so Adapter 14 und Ritzel 12 drehfest miteinander zu verbinden. Vorzugsweise wird der Adapter 14 auf das Ritzel 12 aufgepresst.

Da die Ausnehmungen 12o des Ritzels 12 im vorliegenden Beispiel als Durchgangsöffnungen ausgebildet sind, sind die darin aufgenommenen axialen Vorsprünge 14v des Adapters 14 von der in Teilabbildung 1b) sichtbaren, dem Adapter 12 abgewandten Seite des Ritzels aus zugänglich und können so gewünschtenfalls von dieser Seite aus aus den Durchgangsöffnungen 12o heraus gedrückt werden, um Adapter 14 und Ritzel 12 wieder voneinander zu lösen.

Teilabbildungen 1c) und 1d) zeigen verschiedene perspektivische Ansichten des Gegenstands der Teilabbildungen 1a) und 1b). Es wird darauf hingewiesen, dass nur aufgrund der gewählten Perspektive und der Größenverhältnisse die Tatsache, dass der Rand 11b der zentralen Öffnung 11 des Ritzels 12 erfindungsgemäß weiter nach innen vorsteht als die Bereiche des Randes 13b der zentralen Öffnung 13 des Adapters 14 zwischen benachbarten Mitnehmern 15, in diesen Teilabbildungen nicht oder nur schwer zu erkennen ist.

Teilabbildungen 1e) und 1f) zeigen einen gegenüber dem Adapter 14 der Teilabbildungen 1a) bis 1d) nur leicht modifizierten Adapter 14 eines modifizierten ersten Ausführungsbeispiels, für welches die gleichen Bezugszeichen verwendet werden wie für das erste Ausführungsbeispiel. Im Unterschied zu diesem ist in den Teilabbildungen 1e) und 1f) der Durchmesser der Vorsprünge 14v nicht kleiner als der sondern gleich dem Durchmesser der Befestigungsvorsprünge 17. Die axialen Ausnehmungen oder Durchgangsöffnungen des Ritzels sind natürlich entsprechend anzupassen.

In Figur 1 ist der Radius 11r der zentralen Öffnung 11 des Ritzels 12 über den gesamten Umfang konstant (11r = 11 rmin). Alternativ könnte vorgesehen sein, dass der Radius nur an einigen ausgewählten Stellen seinen Minimalwert annimmt, an denen dann das Ritzel auf den Mitnehmerelementen des Antreibers aufliegt bzw. sich radial abstützt. Um hierdurch eine korrekte Zentrierung der Ritzelanordnung 10 zu erreichen, nimmt der Radius der zentralen Öffnung des Ritzels dabei erfindungsgemäß an wenigstens drei verschiedenen Stellen oder Umfangsabschnitten seinen Minimalwert an, die bevorzugt gleichmäßig über den Umfang verteilt sind.

Bestandteile und Merkmale des zweiten und dritten Ausführungsbeispiels, die solchen des ersten Ausführungsbeispiels entsprechen, werden mit Bezugszeichen versehen, die aus den entsprechenden Bezugszeichen des ersten Ausführungsbeispiels durch Addition der Zahl 100 bzw. 200 hervorgehen. Die weiteren Ausführungsbeispiele werden in erster Linie nur insoweit ausführlich beschrieben, als sie sich vom ersten Ausführungsbeispiel unterscheiden, auf dessen vorstehende Beschreibung ansonsten verwiesen wird.

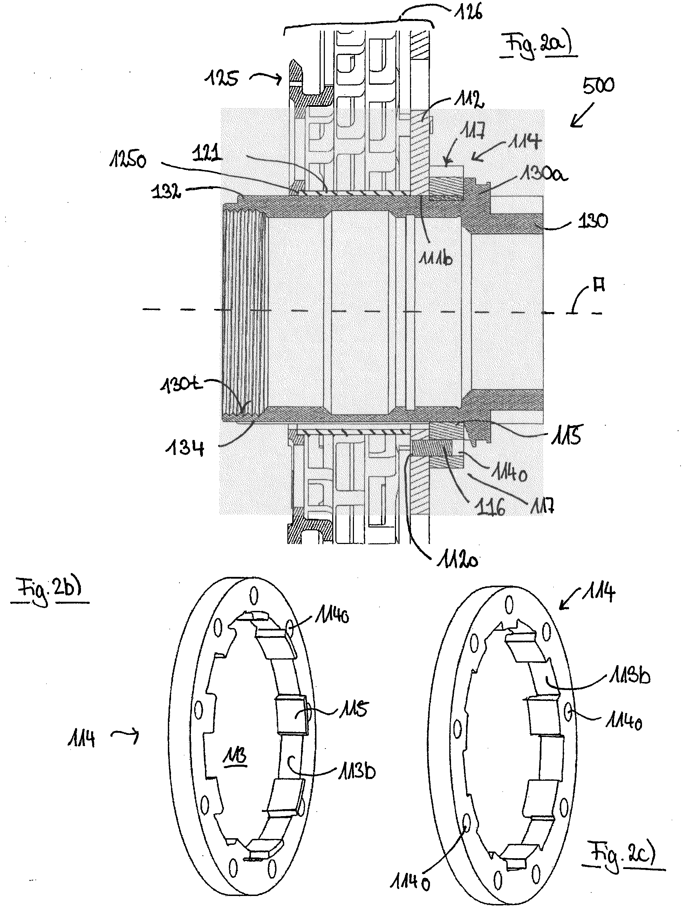

In dem in Figur 2 dargestellten zweiten Ausführungsbeispiel einer erfindungsgemäßen Ritzelanordnung 110 ist der Adapter 114 mit dem Ritzel 112 über separate Stifte 116 verbunden, die in axiale Durchgangsöffnungen 112o, 114o des Ritzels 112 und des Adapters 114 eingesteckt sind. Die Stifte 116 können aus einem Material hergestellt werden, das dazu der Lage ist, hohe Scherkräfte aufzunehmen, etwa aus Stahl. Dabei kann der Adapter 114 wiederum aus einem relativ leichten und kostengünstigen Material hergestellt werden.

Der Adapter 114 entspricht, mit Ausnahme der axialen Öffnungen 114o, die hier anstelle radialer Vorsprünge vorgesehen sind, in seiner äußeren Gestalt im Wesentlichen dem Adapter 14 aus Figur 1, weist also die Grundform eines Kreisrings auf, an dessen Außenumfang radiale Befestigungsvorsprünge 117 oder Befestigungsaugen vorgesehen sind, in deren Mitte sich die axialen Öffnungen 114o befinden, und an dessen Innenumfang im Wesentlichen kreisringsegmentförmige Mitnehmerelemente 115 vorgesehen sind, die sich radial nach innen erstrecken.

Wie die Teilabbildung 2a) zeigt, ist das Ritzel 112 über eine Distanzhülse 121 von einem weiteren Ritzel 125 der Ritzelanordnung 110 beabstandet, welches das kleinste Ritzel der in Fig. 2a) dargestellten Ritzelgruppe 126 bildet, während das Ritzel 112 das größte Ritzel der Ritzelgruppe 126 darstellt.

Die einzelnen Ritzel der Ritzelgruppe 126 können in beliebiger Weise drehfest miteinander verbunden sein, etwa durch Stifte, Niete oder auch, indem mehrere axial beabstandete Ritzel einteilig aus einer Platte durch Stanzen und Umformen ausgebildet sind.

In Teilabbildung 2a) ist weiterhin auch ein Antreiber 130 dargestellt, längs dessen Außenumfang in bekannter Weise abwechselnd Federabschnitte als Mitnehmerelemente 132 und Nutabschnitte 134 vorgesehen sind, die sich jeweils in axialer Richtung erstrecken, wobei die Mitnehmerelemente 132 des Antreibers 130 dazu ausgebildet sind, zwischen benachbarte Mitnehmerelemente 115 des Adapters 114 zur Drehmoment-Übertragung einzugreifen.

Die aus Ritzelanordnung 110 und Antreiber 130 gebildete Fahrrad-Antriebsanordnung erhält das Bezugszeichen 500.

Bei der Ritzelanordnung 110 ist vorgesehen (in der Darstellung allerdings nicht zu erkennen), dass das radiale Spiel zwischen Antreiber 130 und Ritzel 112 kleiner ist als das radiale Spiel zwischen Antreiber 130 und Adapter 114, so dass die radiale Zentrierung der Ritzelanordnung 110 auf dem Antreiber 130 auch hier über das Ritzel 112 erfolgt.

Der radiale Abstand zwischen den Mitnehmerelementen 115 des Adapters 114 und den Nutabschnitten 134 des Antreibers 130 sowie zwischen dem Rand 113b der zentralen Öffnung 113 des Adapters 114 zwischen benachbarten Mitnehmerelementen 115 und den Federabschnitten bzw. Mitnehmerelementen 132 des Antreibers 130 ist also jeweils größer als der Abstand zwischen dem Rand 111b der (kreisförmigen) Öffnung 111 des Ritzels 112 und den Mitnehmerelementen bzw. Federabschnitten 132 des Antreibers 130.

Wenn die Stifte 116 auf der Seite des Ritzels 112, welche der Distanzhülse 121 zugewandt ist, (anders als in Fig. 2a) dargestellt) axial etwas über das Ritzel 112 hinaus vorstehen, wird eine Zentrierung der Distanzhülse 121 auch demontierten Zustand ermöglicht, so dass eine in einem separaten Vorgang hergestellte Aussparung an dem Ritzel 112 vermieden werden kann, wie sie beispielsweise als Aussparung 125o im kleinsten Ritzel 125 vorgesehen ist.

Die Ritzelgruppe 126 sowie gewünschtenfalls weitere (nicht dargestellte) einzelne Ritzel oder Ritzelgruppen können in bekannter Weise zwischen dem rechts in Teilabbildung 2a) dargestellten Flanschabschnitt 130a des Antreibers 130 und einer in das Innengewinde 130t des Adapters 130 einzuschraubende (nicht dargestellte) Abschlussschraube axial fixiert werden.

Der in den Teilabbildungen 2b) und 2d) dargestellte, gegenüber dem Adapter 114 aus Teilabbildung 2a) nur leicht modifizierte und daher mit den gleichen Bezugszeichen wie dieser versehene Adapter 114 unterscheidet sich von dem Adapter aus Teilabbildung 2a) im Wesentlichen dadurch, dass hier keine radial nach außen vorstehenden Befestigungsaugen vorgesehen sind, sondern die axialen Durchgangsöffnungen 114o in den kreisringförmigen Adapter 114 jeweils im Umfangsbereich der Mitnehmerelemente 115 eingebracht sind.

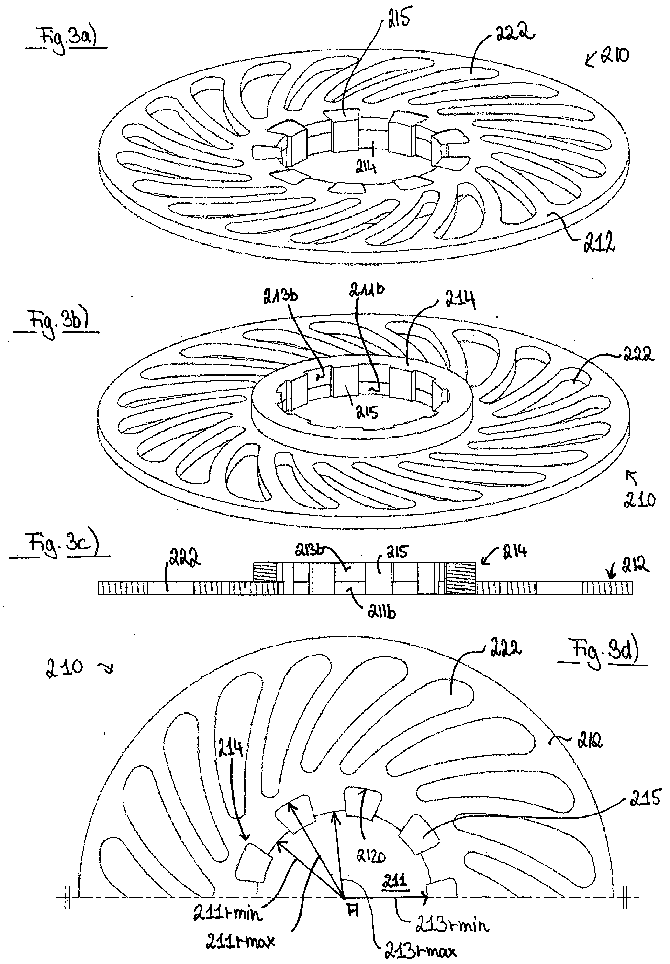

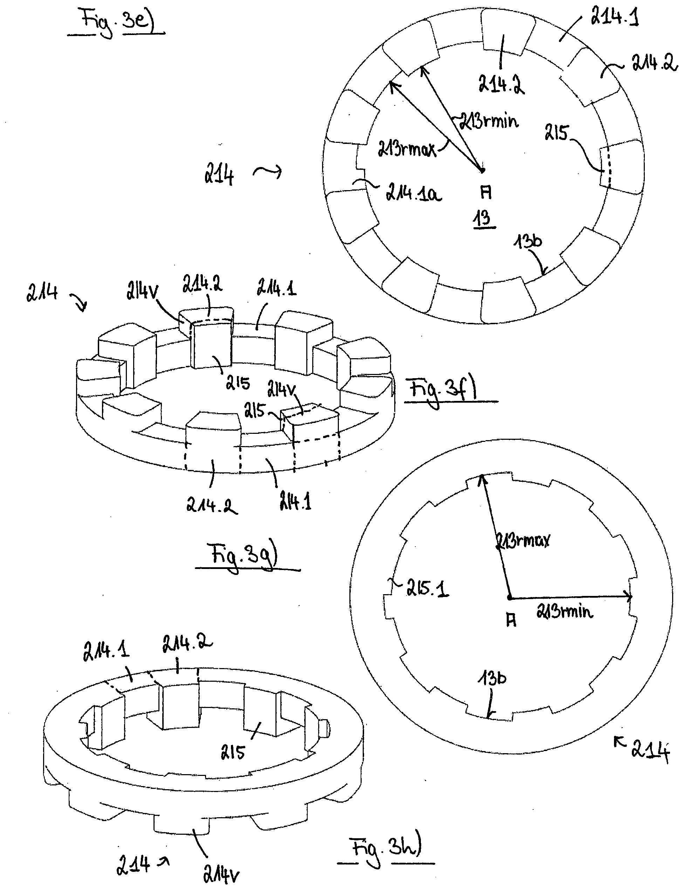

Figur 3 zeigt schließlich in den Teilabbildungen 3a) bis 3d) verschiedene Ansichten eines dritten Ausführungsbeispiels einer erfindungsgemäßen Ritzelanordnung 210, wobei die Teilabbildungen 3e) bis 3h) verschiedene Ansichten des dabei verwendeten Adapters 214 zeigen.

Hierbei sind am Rand der zentralen Öffnung 211 des Ritzels 212 eine Mehrzahl von Ausnehmungen 212o vorgesehen, die sich nach radial außen hin leicht erweitern und sowohl als radiale Ausnehmungen wie auch als axiale Durchgangsöffnungen oder Ausnehmungen angesehen werden können. Die Außenverzahnung des in üblicher Weise eine Mehrzahl von gewichtsreduzierenden Durchgangsöffnungen 222 aufweisenden Ritzels 212 ist aus Gründen der Einfachheit nicht dargestellt.

Der Adapter 214 ist als Ring aus einander in Umfangsrichtung abwechselnden ersten und zweiten Umfangsabschnitten 214.1, 214.2 (vgl. Fig. 3e) bis 3h) jeweils mit der Grundform von Kreisringsegmenten ausgebildet, wobei die in einigen Teilabbildungen durch Strichlinien angedeuteten zweiten Umfangsabschnitte 214.2 die ersten Umfangsabschnitte 214.1 radial nach innen überragen und axial zu der Seite hin überragen, die montierten Zustand (Teilabbildung 3a) dem Ritzel 212 zugewandt ist.

Dabei fungieren diejenigen Abschnitte der zweiten Umfangsabschnitte 214.12, welche die ersten Umfangsabschnitte 214.1 radial nach innen überragen, als Mitnehmer-Elemente 215 des Adapters 214.

Die Abschnitte 214v der zweiten Umfangsabschnitte 214.2, welche die ersten Umfangsabschnitte 214.1 axial überragen, sind dazu ausgebildet, in die Ausnehmungen 212o des Ritzels 212 einzugreifen und damit das Ritzel 212 drehfest mit dem Adapter 214 zu verbinden.

Ein spezielles Mitnehmerelement 215.1 (vgl. Teilabbildung 3g)) kann dabei in Umfangsrichtung länger ausgebildet sein als die anderen. Dieses spezielle Mitnehmerelement 215.1 entspricht in bekannter Weise einem speziellen Nutabschnitt des hier nicht dargestellten Antreibers und dient dazu, die Ritzelanordnung 210 in einer bestimmten, vorgegebenen Winkelstellung am Antreiber zu positionieren. Alternativ könnte man auch sagen, dass ein spezieller erster Umfangsabschnitt 214.1a etwas anders ausgebildet ist, als die übrigen ersten Umfangsabschnitte 214.1.

Auch bei dem Ausführungsbeispiel aus Figur 3 ist der minimale Radius 211 rmin der zentralen Öffnung 211r des Ritzels 212 (der hier an neun über den Umfang verteilten Umfangsabschnitten der zentralen Öffnung 211 angenommen wird) kleiner als der maximale Radius 213rmax der zentralen Öffnung 213 des Adapters 214, obwohl dies in den Abbildungen aufgrund der Größenverhältnisse leider nicht gut zu erkennen ist.

Die Ausnehmungen oder Aussparungen 212o am Ritzel für die Eingriffselemente 214v des Adapters 214 sind entsprechend der Flächenpressungsspezifikation des verwendeten Werkstoffs dimensioniert. Das Gleiche gilt für die axiale Ausdehnung des radialen Eingriffsprofils am (nicht dargestellten) Antreiber.

Der in den Teilabbildungen 3e) bis 3h) dargestellte Adapter-Ring 214 kann auf besonders einfache Weise als einteilig ausgebildetes Bauteil im Spritzgussverfahren hergestellt und durch einfaches Aufschieben bzw. Aufpressen auf das Ritzel 212 an diesem montiert werden.

### Bezugszeichen

Ritzelanordnung 10; 110; 210
Ritzel 12; 112; 212
zentrale Öffnung des Ritzels 11; 111; 211
Rand der zentralen Öffnung des Ritzels 11b; 111b; 211b
Adapter 14; 114; 214
axialer Vorsprung des Adapters 14v
zentrale Öffnung des Adapters 13; 113; 213
Rand der zentralen Öffnung des Adapters 13b; 113b; 213b
Radius der zentralen Öffnung des Adapters 13r
minimaler Radius der zentralen Öffnung des Adapters 13rmin
maximaler Radius der zentralen Öffnung des Adapters 13rmax
Mitnehmer-Elemente des Adapters 15; 115; 215
Rotationsachse der Ritzelanordnung A
Befestigungsvorsprung bzw. Befestigungsauge 17; 117
Vertiefung im Befestigungsvorsprung 17d
Innenring des Ritzels 18
Verbindungsarm des Ritzels 19
axiale Durchgangsöffnung bzw. Ausnehmung des Ritzels 12o; 112o; 212o
axiale Durchgangsöffnung des Adapters 114o
Stift 116
Distanzhülse 121
weiteres Ritzel 125
Aussparung im weiteren Ritzel 125o
Ritzelgruppe 126
Antreiber 130
Flanschabschnitt des Antreibers 130a
Innengewinde des Antreibers 130t
Federabschnitt bzw. Mitnehmerelement des Antreibers 132
Nutabschnitt des Antreibers 134
gewichtsreduzierende Durchgangsöffnung 222
erster Umfangsabschnitt des Adapters 214.1
zweiter Umfangsabschnitt des Adapters 214.2
spezielles Mitnehmerelement 215.a
spezieller erster Umfangsabschnitt 214.1a

## Patentansprüche

1. Ritzelanordnung (10; 110; 210) für einen Fahrrad-Antrieb, umfassend:
ein Ritzel (12; 112; 212) mit einer zentralen Öffnung (11; 111; 211) und einer Außenverzahnung,
einen separat von dem Ritzel (12; 112; 212) ausgebildeten Adapter (14; 114; 214), der dazu angepasst ist, drehfest mit dem Ritzel (12; 112; 212) verbunden zu werden, und der eine zentralen Öffnung (13; 113; 213) umfasst, an deren Rand (13b; 113b; 213b) mehrere Mitnehmerelemente (15; 115; 215) vorgesehen sind, die sich vom Rand (13b; 113b; 213b) der zentralen Öffnung (13; 113; 213) des Adapters (14; 114; 214) radial nach innen erstrecken und dazu ausgebildet sind, Drehmoment von dem mit dem Adapter (14; 114; 214) verbundenen Ritzel (12; 112; 212) auf einen Antreiber an einer Hinterrad-Nabe eines Fahrrads zu übertragen,
**dadurch gekennzeichnet, dass** der minimale Radius (11rmin; 211 rmin) der zentralen Öffnung (11; 111; 211) des Ritzels (12; 112; 212) kleiner ist als der maximale Radius (13rmax; 213rmax) der zentralen Öffnung (13; 113; 213) des Adapters (14; 114; 214), wobei der Radius (11r) der zentralen Öffnung (11; 111; 211) des Ritzels (12; 112; 212) an wenigstens drei über den Umfang verteilen Stellen oder Umfangsabschnitten, vorzugsweise über den gesamten Umfang, seinen Minimalwert (11 rmin; 211 rmin) annimmt.

2. Ritzelanordnung (10; 110; 210) nach Anspruch 1,
**dadurch gekennzeichnet, dass** das Ritzel (12; 112; 212) aus einem Material hergestellt ist, das härter ist als das Material des Adapters (14; 114; 214).

3. Ritzelanordnung (10; 110; 210) nach Anspruch 1 oder 2,
**dadurch gekennzeichnet, dass** der Adapter (14; 114; 214) aus Aluminium oder GFK hergestellt ist, vorzugsweise im Spritzgussverfahren.

4. Ritzelanordnung (10; 210) nach einem der vorhergehenden Ansprüche,
**dadurch gekennzeichnet, dass** ein Element (12, 14; 212; 214) aus dem Adapter (14; 214) und dem Ritzel (12; 212) eine Mehrzahl von axialen Ausnehmungen (12o; 212o) umfasst, und das andere Element (14, 12; 214, 212) eine Mehrzahl von axialen Vorsprüngen (14v; 214v) umfasst, die dazu ausgebildet sind, in die axialen Ausnehmungen (12o; 212o) einzugreifen, vorzugsweise mit einer Presspassung, wobei die axialen Ausnehmungen (12o; 212o) vorzugsweise als axiale Durchgangsöffnungen ausgebildet sind.

5. Ritzelanordnung (110) nach Anspruch 1,
**dadurch gekennzeichnet, dass** der Adapter (114) und das Ritzel (112) jeweils eine Mehrzahl von axialen Ausnehmungen (112o, 114o) umfassen, wobei die Ritzelanordnung (110) weiter eine Mehrzahl von Stiften (116), vorzugsweise Stahlstiften umfasst, die in die axialen Ausnehmungen (112o, 114o) von dem Adapter (114) und dem Ritzel (112) eingesetzt, vorzugsweise eingepresst sind, so dass die Stifte (116) den Adapter (114) und das Ritzel (112) drehfest miteinander verbinden.

6. Ritzelanordnung (210) nach Anspruch 1,
**dadurch gekennzeichnet, dass**
am Rand der zentralen Öffnung (211) des Ritzels (212) eine Mehrzahl von Ausnehmungen (212o) vorgesehen sind, und dass der Adapter (214) als Ring aus einander in Umfangsrichtung abwechselnden ersten und zweiten Umfangsabschnitten (214.1, 214.2) mit der Grundform von Kreisring-Segmenten ausgebildet ist, wobei die zweiten Umfangsabschnitte (214.2) die ersten Umfangsabschnitte (214.1) radial nach innen überragen und axial zu einer Seite des Adapters (214) hin überragen, die im an dem Ritzel (212) befestigten Zustand dem Ritzel (212) zugewandt ist, wobei diejenigen Abschnitte der zweiten Umfangsabschnitte (214.2), welche die ersten Umfangsabschnitte (214.1) radial nach innen überragen, die Mitnehmer-Elemente (215) des Adapters (214) bilden, und diejenigen Abschnitte (214v) der zweiten Umfangsabschnitte (214.2), welche die ersten Umfangsabschnitte (214.1) axial überragen, dazu ausgebildet sind, in die Ausnehmungen (214o) des Ritzels (214) einzugreifen.

7. Antriebsanordnung (500) für ein Fahrrad, umfassend
eine Ritzelanordnung (10; 110; 210) nach einem der vorhergehenden Ansprüche und einen Antreiber (130) mit mehreren Mitnehmer-Elementen (132), die dazu ausgebildet sind, zwischen die Mitnehmer-Elemente (15; 115; 215) des Adapters einzugreifen, um eine Drehmoment-Übertragung von dem Ritzel (12; 112; 212) über den Adapter (14; 114; 214) auf den Antreiber (130) zu gewährleisten, wobei das radiale Spiel zwischen dem Antreiber (130) und dem Ritzel (12; 112; 212) kleiner ist als das radiale Spiel zwischen dem Antreiber (130) und dem Adapter (14; 114; 214).

8. Antriebsanordnung (500) nach Anspruch 7,
**dadurch gekennzeichnet, dass** zwischen dem Ritzel (12; 112; 212) und dem Antreiber eine Übergangspassung oder Presspassung vorliegt, während zwischen dem Adapter (14; 114; 214) und dem Antreiber eine Spielpassung vorliegt.

## Claims

1. Pinion arrangement (10; 110; 210) for a bicycle drive, comprising:
a pinion (12; 112; 212) with a central opening (11; 111; 211) and an external toothing system,
an adapter (14; 114; 214) which is configured separately from the pinion (12; 112; 212), is adapted to be connected fixedly to the pinion (12; 112; 212) so as to rotate with it, and comprises a central opening (13; 113; 213), on the edge (13b; 113b; 213b) of which a plurality of cam elements (15; 115; 215) are provided which extend from the edge (13b; 113b; 213b) of the central opening (13; 113; 213) of the adapter (14; 114; 214) radially to the inside and are configured to transmit torque from the pinion (12; 112; 212) which is connected to the adapter (14; 114; 214) to a driver on a rear wheel hub of a bicycle,
**characterized in that** the minimum radius (11rmin; 211rmin) of the central opening (11; 111; 211) of the pinion (12; 112; 212) is smaller than the maximum radius (13rmax; 213rmax) of the central opening (13; 113; 213) of the adapter (14; 114; 214), the radius (11r) of the central opening (11; 111; 211) of the pinion (12; 112; 212) assuming its minimum value (11rmin; 211rmin) at at least three circumferential sections or points distributed over the circumference, preferably over the entire circumference.

2. Pinion arrangement (10; 110; 210) according to Claim 1, **characterized in that** the pinion (12; 112; 212) is produced from a material which is harder than the material of the adapter (14; 114; 214).

3. Pinion arrangement (10; 110; 210) according to Claim 1 or 2, **characterized in that** the adapter (14; 114; 214) is produced from aluminium or GFRP, preferably using the injection moulding process.

4. Pinion arrangement (10; 210) according to one of the preceding claims, **characterized in that** one element (12, 14; 212; 214) from the adapter (14; 214) and the pinion (12; 212) comprises a plurality of axial recesses (12o; 212o), and the other element (14, 12; 214, 212) comprises a plurality of axial projections (14v; 214v) which are configured to engage into the axial recesses (12o; 212o), preferably with an interference fit, the axial recesses (12o; 212o) preferably being configured as axial through openings.

5. Pinion arrangement (110) according to Claim 1, **characterized in that** the adapter (114) and the pinion (112) in each case comprise a plurality of axial recesses (112o, 114o), the pinion arrangement (110) comprising, furthermore, a plurality of pins (116), preferably steel pins, which are inserted, preferably pressed, into the axial recesses (112o, 114o) of the adapter (114) and the pinion (112), with the result that the pins (116) connect the adapter (114) and the pinion (112) fixedly to one another so as to rotate together.

6. Pinion arrangement (210) according to Claim 1, **characterized in that** a plurality of recesses (212o) are provided at the edge of the central opening (211) of the pinion (212), and **in that** the adapter (214) is configured as a ring comprising first and second circumferential sections (214.1, 214.2) with the basic shape of circular ring segments which alternate with one another in the circumferential direction, the second circumferential sections (214.2) protruding radially inwards beyond the first circumferential sections (214.1) and protruding axially towards a side of the adapter (214), which side faces the pinion (212) in the state, in which it is fastened to the pinion (212), those sections of the second circumferential sections (214.2) which protrude radially inwards beyond the first circumferential sections (214.1) forming the cam elements (215) of the adapter (214), and those sections (214v) of the second circumferential sections (214.2) which protrude axially beyond the first circumferential sections (214.1) being configured to engage into the recesses (214o) of the pinion (214).

7. Drive arrangement (500) for a bicycle, comprising a pinion arrangement (10; 110; 220) according to one of the preceding claims and a driver (130) with a plurality of cam elements (132) which are configured to engage between the cam elements (15; 115; 215) of the adapter, in order to ensure a torque transmission from the pinion (12; 112; 212) via the adapter (14; 114; 214) to the driver (130), the radial play between the driver (130) and the pinion (12; 112; 212) being smaller than the radial play between the driver (130) and the adapter (14; 114; 214).

8. Drive arrangement (500) according to Claim 7, **characterized in that** there is a transition fit or interference fit between the pinion (12; 112; 212) and the driver, whereas there is a clearance fit between the adapter (14; 114; 214) and the driver.

## Revendications

1. Système de pignon (10; 110; 210) pour un entraînement de bicyclette, comprenant:
un pignon (12; 112; 212) avec une ouverture centrale (11; 111; 211) et une denture extérieure,
un adaptateur (14; 114; 214) formé séparément du pignon (12; 112; 212), qui est apte à être calé de manière solidaire en rotation avec le pignon (12; 112; 212), et qui comprend une ouverture centrale (13; 113; 213), sur le bord (13b; 113b; 213b) de laquelle il est prévu plusieurs éléments d'entraîneur (15; 115; 215), qui s'étendent radialement vers l'intérieur à partir du bord (13b; 113b; 213b) de l'ouverture centrale (13; 113; 213) de l'adaptateur (14; 114; 214) et qui sont configurés de façon à transmettre un couple de rotation du pignon (12; 112; 212) relié à l'adaptateur (14; 114; 214) à un entraîneur sur un moyeu de roue arrière d'une bicyclette,
**caractérisé en ce que** le rayon minimal (11 rmin; 211 rmin) de l'ouverture centrale (11; 111; 211) du pignon (12; 112; 212) est plus petit que le rayon maximal (13 rmax; 213 rmax) de l'ouverture centrale (13; 113; 213) de l'adaptateur (14; 114; 214), dans lequel le rayon (11r) de l'ouverture centrale (11; 111; 211) du pignon (12; 112; 212) prend sa valeur minimale (11 rmin; 211 rmin) sur au moins trois points ou segments périphériques répartis sur la périphérie, de préférence sur toute la périphérie.

2. Système de pignon (10; 110; 210) selon la revendication 1, **caractérisé en ce que** le pignon (12; 112; 212) est fabriqué en un matériau, qui est plus dur que le matériau de l'adaptateur (14; 114; 214).

3. Système de pignon (10; 110; 210) selon la revendication 1 ou 2, **caractérisé en ce que** l'adaptateur (14; 114; 214) est fabriqué en aluminium ou en GFK, de préférence par un procédé de coulée par injection.

4. Agencement de pignon (10; 210) selon l'une quelconque des revendications précédentes, **caractérisé en ce qu'**un élément (12, 14; 212; 214) parmi l'adaptateur (14; 214) et le pignon (12; 212) comprend une multiplicité d'évidements axiaux (12o; 212o), et l'autre élément (14, 12; 214, 212) comprend une multiplicité de saillies axiales (14v; 214v), qui sont configurées de façon à s'engager dans les évidements axiaux (12o; 212o), de préférence avec un ajustement serré, dans lequel les évidements axiaux (12o; 212o) sont réalisés de préférence sous forme d'ouvertures de passage axiales.

5. Système de pignon (110) selon la revendication 1, **caractérisé en ce que** l'adaptateur (114) et le pignon (112) comprennent respectivement une multiplicité d'évidements axiaux (112o, 114o), dans lequel le système de pignon (110) comprend en outre une multiplicité de tiges (116), de préférence de tiges d'acier, qui sont introduites, de préférence pressées, dans les évidements axiaux (112o, 114o) de l'adaptateur (114) et du pignon (112), de telle manière que les tiges (116) relient l'un à l'autre de manière solidaire en rotation l'adaptateur (114) et le pignon (112).

6. Système de pignon (210) selon la revendication 1, **caractérisé en ce qu'**il est prévu sur le bord de l'ouverture centrale (211) du pignon (212) une multiplicité d'évidements (212o), et **en ce que** l'adaptateur (214) est réalisé sous la forme d'une bague composée de premières et de deuxièmes parties périphériques (214.1, 214.2) alternant l'une avec l'autre en direction périphérique avec la forme de base de segments de bague circulaire, dans lequel les deuxièmes parties périphériques (214.2) dépassent les premières parties périphériques (214.1) radialement vers l'intérieur et axialement en direction d'un côté de l'adaptateur (214), qui dans l'état fixé au pignon (212) est tourné vers le pignon (212), dans lequel les parties des deuxièmes parties périphériques (214.2), qui dépassent les premières parties périphériques (214.1) radialement vers l'intérieur, forment les éléments d'entraîneur (215) de l'adaptateur (214), et les parties (214v) des deuxièmes parties périphériques (214.2), qui dépassent axialement les premières parties périphériques (214.1), sont configurées de façon à s'engager dans les évidements (214o) du pignon (214).

7. Agencement d'entraînement (500) pour une bicyclette, comprenant un système de pignon (10; 110; 210) selon l'une quelconque des revendications précédentes et un entraîneur (130) avec plusieurs éléments d'entraîneur (132), qui sont configurés pour s'engager entre les éléments d'entraîneur (15; 115; 215) de l'adaptateur, afin de garantir une transmission de couple de rotation du pignon (12; 112; 212) via l'adaptateur (14; 114; 214) à l'entraîneur (130), dans lequel le jeu radial entre l'entraîneur (130) et le pignon (12; 112; 212) est plus petit que le jeu radial entre l'entraîneur (130) et l'adaptateur (14; 114; 214).

8. Agencement d'entraînement (500) selon la revendication 7, **caractérisé en ce qu'**il se trouve entre le pignon (12; 112; 212) et l'entraîneur un ajustement de transition ou un ajustement serré, tandis qu'il se trouve un ajustement avec jeu entre l'adaptateur (14; 114; 214) et l'entraîneur.
